(19) Europäisches Patentamt
European Patent Office
Office européen des brevets

(11) **EP 2 148 421 A1**

(12) # EUROPEAN PATENT APPLICATION

(43) Date of publication:
**27.01.2010 Bulletin 2010/04**

(51) Int Cl.:
**H02M 7/5387** *(2007.01)*   **H05B 6/10** *(2006.01)*

(21) Application number: **08385002.4**

(22) Date of filing: **21.07.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **GH Electrotermia, S.A.**<br>**46184 San Antonio de Benageber (ES)** | (72) Inventors:<br>• **Dede Garcia-Santamaria, Enrique J.**<br>**46100 Burjasot (ES)**<br>• **Esteve Gomez, Vicente**<br>**46100 Burjasot (ES)**<br>• **Jordan Martinez, Jose**<br>**46100 Burjasot (ES)**<br>• **Herrero Garcia, Raul**<br>**46184 San Antonio de Benageber ( Valencia) (ES)** |

(54) **Pulse density modulated high efficiency converter for induction heating**

(57)   The invention consists of an apparatus for industrial induction heating applications fitted with an inverter with a control system enabling a considerable reduction in the transistor losses. The converter consists in a three-phase diode rectifier (1), a full bridge inverter (2), a series resonant output circuit with a matching transformer (3) and a control and auxiliary items block(4). The switching frequency of the inverter automatically adapts to the resonant frequency of the load enabling ZCS (zero current switching) switching for any load situation. An output power control system, based on Pulse Density Modulation (PDM), continuously regulates the output power, maintaining the ZCS mode. Appropriate management of the dead time of the driving pulses of the inverter transistors ensures Zero Voltage Switching (ZVS) operation. The maximum output power of the inverter, when running at high frequencies, is obtained with modulation index values below one.

FIG. 1

EP 2 148 421 A1

**Description**

## OBJECT OF THE INVENTION

As stated in the heading of this descriptive report, this invention refers to a converter whose essential property consists in generating an alternating output current with high power efficiency enabling high frequency induction heating processes with continuous output power regulation, being its main application in high frequency induction heating applications. The invention consists in a converters connected to the to the electrical power mains containing an inverter whose output is connected to a series resonant circuit and with a control strategy based on a pulse density modulation of the output voltage. With the solution proposed in the invention a significant losses reduction is obtained enabling consequently, amongst others, its operation at frequencies over 100 kHz. The technical field in which the invention is involved is induction heating.

## BACKGROUND OF THE INVENTION

Converters for induction heating working with output frequencies over 100 kilohertz are traditionally based on oscillating circuits with electronic valves powered with high DC voltage. These converters have low power efficiency and tend to be replaced by converters based on transistorised inverters whose efficiency considerably increases. MOSFET transistors are used in these inverters although the use of IGBT transistors could imply a reduction in the complexity and cost of the equipment. At the present high frequency inverters with IGBT transistors provide reduced efficiency in industrial applications, not over 90 percent for frequencies over 100 kilohertz.
This invention proposes an inverter which may be built with IGBT transistors and with which a major improvement in efficiency can be obtained by a considerable reduction in losses of the power transistors.

## DESCRIPTION OF THE INVENTION

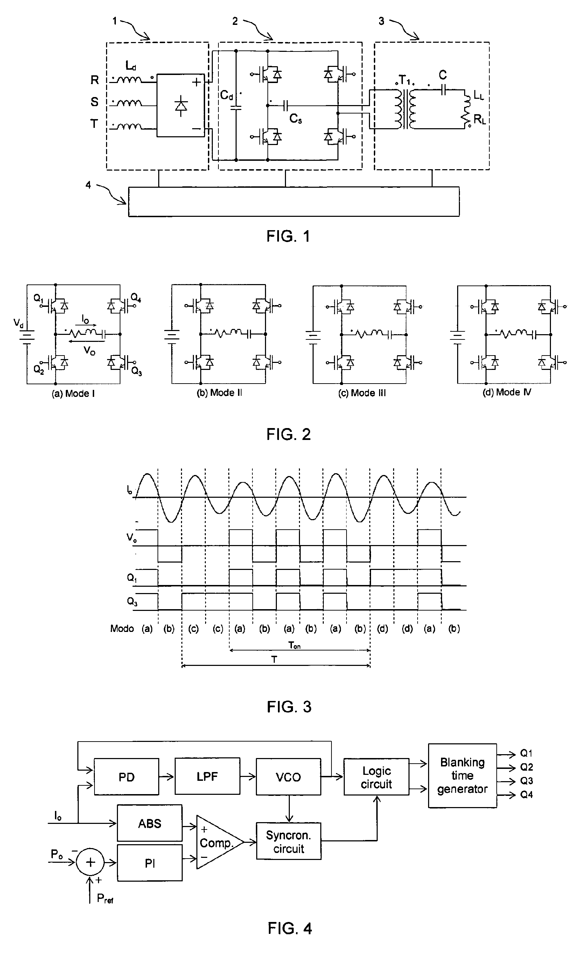

In industrial applications of induction heating such as forging, melting or surface hardening, voltage-fed or current-fed can be used. For economic reasons, voltage-fed inverters are the optimum solution. Voltage-fed inverters fed from the rectified electrical alternating current (AC) grid cannot control their output power by themselves unless the value of the continuous supply voltage can be controlled. By the use of a controlled thyristor bridge or some other type of switch, with input inductors and an output capacitors, a variable supply DC voltage can be obtained but such a circuit considerably increases the cost and size of the installations. In order to overcome these disadvantages and succeed in regulating the output power of the inverter using a single diode rectifier as a DC power supply, advanced control strategies have to be implemented, such as variable frequency or variable phase control. The use of these control strategies nevertheless increases the switching losses and the emission of electromagnetic interferences since it is impossible for the inverter bridge transistors be able to simultaneously switch on and off soft (zero current and voltage) for all operating conditions of the load. This patent describes a converter for industrial induction heating applications with a control strategy enabling a considerable reduction in the inverter transistor losses. The converter basically consists, as shown in Figure 1, in a three-phase diode rectifier (1), a full-bridge inverter (2), a series resonant circuit with matching transformer (3) and a controller and auxiliary items block (4). The inverter switching frequency automatically adjusts itself close to the resonant frequency of the output resonant load circuit, enabling the transistors to switch practically in the ZCS (zero current switching) mode for any load situation. An output power controller based on Pulse Density Modulation provides continuous output power regulation maintaining ZCS switching. A proper management of the inverter transistors dead time of the driving signals ensures operation in ZVS (zero voltage switching) mode. An inverter circuit based on similar operating principles, with a different control strategy, without continuous power control, with different semiconductor devices and for different applications (low power induction heating for dental applications), is described in the publication by H. Fujita and H. Akagi entitled "Pulse-density-modulated power control of a 4 kW 450 kHz voltage-source inverter for induction melting applications," (IEEE Trans. Industry Applications, vol. IA-32, no.2, pp. 279-286, 1996).

Figure 2 shows the switching modes of the series resonant load voltage-fed inverter with power Pulse Density Modulation (PDM) power control. With a conventional control this type of inverters alternates only modes I and II (corresponding to graphs (a) and (b) of Figure 2) in order to produce a square output voltage. With the new controller based on Pulse Density Modulation, modes III and IV are added to achieve zero voltage state at the output of the inverter as shown in graphs (c) and (d) of Figure 2. During modes III and IV, the gate signal of the transistors in the lower or upper branch is respectively activated. Consequently, for each branch there is compliance with the requirement that each transistor and the opposite antiparallel diode (the one with the other transistor in the branch) remain conducting so that the load current recirculates in zero voltage mode.

Figure 3 shows how the power regulation based on PDM works. Vo and Io are respectively the output voltage and current of the inverter. Signals Q1 and Q3 represent the waveforms at the gates of transistors Q1 and Q3. The new PDM inverter periodically repeats ON and OFF sequences for the conduction of the transistors in order to adjust the value of the actual output magnitudes (voltage, current or power) to the pre-set value. It can be shown that the output power of the inverter is given by the following expression:

$$P = P_{\max}\left[\frac{T_{on}}{T} + \frac{\tau}{T}\left(\frac{1-e^{-T_{on}/\tau}}{1-e^{-T/\tau}}\right)\left(e^{-T_{on}/\tau} - e^{-T/\tau}\right)\right] \quad (1)$$

where T is the period of sequence PDM, Ton corresponds to the time in which the inverter is activated, $\tau = Q/(\pi f_o)$ where Q and fo are respectively the quality factor and the resonance frequency of the load circuit, and $P_{\max} = (2/\pi)V_d I_{\max}\cos\theta$, where θ is the phase-shift between the output voltage and current. The term Ton/T is defined as modulation index and its value directly determines the output power for sufficiently high values of Q. One differentiating characteristic of this patent consists in the fact that the maximum output power of the inverter, when working at high frequencies, is obtained for modulation index values less than one, due to a major improvement in the efficiency.

Figure 4 shows the block diagram of the control circuit of the PDM inverter covered by this invention. This circuit is divided into the following three parts:

1.- A **PLL (phase-locked loop)** based circuit controlling the phase-shift between the output current and voltage Io and Vo in order to keep the switching frequency close to the resonant frequency of the load and consequently get as close as possible ZCS commutations. This circuit basically consists of a phase detector (PD), a low pass filter (LPF) and a voltage-controlled oscillator (VCO).

2.- A **modulation circuit** for regulating the output power of the inverter by means of PDM control. The comparison between a Pref reference value and the present average value of the output power Po generates a voltage which is compared with the peak value of the output current of the inverter to obtain a synchronised logic signal which controls the output sequence of the PDM circuit output. This circuit consists of output current and power sensors, a reference signal, a proportional and integral regulation circuit (PI), an absolute value circuit (ABS), an analogue comparator and combinational and sequential logical circuits for synchronisation and generation of control signals.

3.- A **dead time generator** for getting the driving signals of the transistors of the inverter bridge (Q1, Q2, Q3 and Q4) as well as to maintain the ZVS switching mode.

The power regulation system presented in this invention controls fast, continuously and automatically the value of the inverter output current. The system measures the inverter output peak current; if at any time this peak current value exceeds the pre-set value, the PDM modulator reduces immediately the modulation index and consequently reducing the effective values of voltage and output current. This process is done continuously with a dynamic cut-off frequency pattern in the range of few kHz.

This same circuit has a system for measuring the phase shift between the voltage and the output current of the inverter. When a phase shift is very close to zero or with the opposite sign is detected, the modulation index is instantaneously and transitorily cancelled until the disturbing condition is restored. The design of this system makes possible, in temporary short circuit conditions, the continuous operation of the inverter.

Another feature of the circuit consists in controlling the switching signals of the inverter transistors in order to guarantee an average output voltage (DC voltage) value very close to zero. If this value rises notably, the system removes the switching of the transistors from the relevant conducting branch of the inverter bridge as may be necessary to reduce the average value of the output voltage. In this situation, there are no problems with saturation of the output transformer and consequently, the connection of a blocking capacitor (Cs) at the inverter output becomes unnecessary.

An auxiliary control circuit has the task of damping the oscillation of the input voltage of the inverter produced by the forced stimulation of the LC input circuit due to the PDM modulation. This is achieved by adding a signal to the reference value of the PI regulator, proportional to the voltage ripple measured at the input of the inverter. If the voltage ripple rises, the reference signal increases proportionally, thus increasing the output current. In the same way, if the voltage ripple drops, the output current lowers proportionally. A considerable attenuation of the inverter input ripple voltage is obtained without changing the average value of the power supplied to the load.

The circuit for synchronisation and generation of control signals is designed in such a way as to automatically balance the power losses on the power transistor of the inverter by including a system, which alternately sequences the driving of the transistors that recirculate the output current of the inverter.

## SHORT DESCRIPTION OF THE FIGURES

**Figure 1.-** Represents a functional block diagram of a converter which has an inverter for induction heating applications made according to this invention.
**Figure 2.-** Represents the basic electronic diagram of the inverter of the previous Figure 1, indicating its switching waveforms.
**Figure 3.-** Represents the main output waveforms and the PDM switching pattern of the inverter referred to in the previous figures.
**Figure 4.-** Represents the block diagram of the inverter control circuit referred to in the above figures.

## DESCRIPTION OF EXAMPLES OF EMBODIMENTS OF THE INVENTION

A description by an example of the invention, with reference to the numbering used in the figures is now given. The invention consist in an electronic system made up of four main blocks, 1, 2, 3, 4, as represented in Figure 1, which consist in an input non-controlled rectifier circuit 1 connected to the electrical mains with phases R, S and T through inductances Ld, an inverter circuit 2 with an intermediate energy-storing capacitor Cd, four IGBT transistors in a full bridge structure and an optional output capacitor Cs, a series resonant output circuit 3 made up of an optional adaptation transformer T1, a resonant capacitor C and a heating inductor L1 where the work piece to be heated is located, whose equivalent resistance is R1, and a block 4 for auxiliary supply, regulation, supervision, display, cooling and communication required for the system to run properly, with blocks 1, 2, 3 and 4 forming an electronic system that can be fitted in a single cabinet or unit.
In the preferential embodiment of the invention there will be a cabinet in which all the circuits for the four functional blocks stated above will be fitted, apart from the cooling devices necessary for the power circuits. Its dimensions depend mainly on the nominal output power of the converter. The outer panels of the cabinet contain the connections with the electrical supply mains and with the heating inductor, the connectors corresponding to the circuits for the auxiliary supply, regulation, supervision and communication, and the items for inlet and outlet of the cooling fluid, which will be air or water depending on the nominal power of the system. The output power of the equipment is defined to suite the needs of the application, ranging from a few kilowatts to values over a megawatt.
The basic electronic diagram of the inverter is represented in Figure 2 indicating its switching modes. The main waveforms at the output and the PDM switching pattern of the inverter are represented in Figure 3. The block diagram of the inverter control circuit is represented in Figure 4.
By using the circuits and control strategies described in this example of embodiment of this invention, an improvement in the inverter efficiency is obtained in respect of the efficiency of the same inverter using a conventional control strategy for frequency modulation over four per cent for a modulation index value close to 0.65 with an operating frequency of 150 kilohertz. In this situation, and keeping the power losses of the inverter components constant, an increase in the output power of over seventy per cent can be obtained.

**Claims**

1. **HIGH EFFICIENCY CONVERTER FOR INDUCTION HEATING,** by means of which an improvement in efficiency can be obtained, by considerably lowering the losses from the power switching transistors.

2. **HIGH EFFICIENCY CONVERTER FOR INDUCTION HEATING,** according to claim 1, where the power regulation method used is based in a pulse density modulation whose modulation index is the result of the cycle to cycle comparison of the actual value of the inverter output current and the reference regulation value.

3. **HIGH EFFICIENCY CONVERTER FOR INDUCTION HEATING,** according to claims 1 and 2, where an improvement in efficiency is obtained by maintaining automatically its output current and voltage practically in phase.

4. **HIGH EFFICIENCY CONVERTER FOR INDUCTION HEATING,** according to claims 1 and 2 and 3, wherein an improvement in efficiency is obtained thanks to getting the maximum output power with specific modulation indices under the unit.

5. **HIGH EFFICIENCY CONVERTER FOR INDUCTION HEATING,** according to any of the previous claims, wherein the modulation index is automatically controlled, optimising the efficiency and limiting the overheating of the transistors for any operating condition.

6. **HIGH EFFICIENCY CONVERTER FOR INDUCTION HEATING,** according to any of the previous claims, wherein the amplitude of the output power, current or voltage is continuously and automatically regulated.

7. **HIGH EFFICIENCY CONVERTER FOR INDUCTION HEATING,** according to any of the previous claims, having a special control circuit which automatically balances the power losses of its transistor components.

8. **HIGH EFFICIENCY CONVERTER FOR INDUCTION HEATING,** according to any of the previous claims, having a special control circuit which eliminates the need for connecting DC blocking capacitors at the output of the inverter.

9. **HIGH EFFICIENCY CONVERTER FOR INDUCTION HEATING,** according to any of the previous claims, having a special control circuit which enables its continuous operation in transitory short-circuit conditions.

10. **HIGH EFFICIENCY CONVERTER FOR INDUCTION HEATING,** according to any of the previous claims, having a special control circuit which considerably damps the oscillations in its input voltage.

FIG. 1

(a) Mode I     (b) Mode II     (c) Mode III     (d) Mode IV

FIG. 2

FIG. 3

FIG. 4

Europäisches
Patentamt

European
Patent Office

Office européen
des brevets

**EUROPEAN SEARCH REPORT**

Application Number

EP 08 38 5002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 363 474 A (ELDEC SCHWENK INDUCTION GMBH [DE]) 19 November 2003 (2003-11-19)<br>* abstract *<br>* figures 1,3,5,9 *<br>* paragraphs [0007], [0009], [0010], [0018], [0020], [0023], [0030], [0036], [0038], [0042], [0044], [0045], [0056], [0064] *<br>* paragraphs [0085], [0086], [0089], [0102], [0103], [0107], [0108] *<br>* claims 2-7,13,26 *<br>----- | 1-10 | INV.<br>H02M7/5387<br>H05B6/10 |
| | | | TECHNICAL FIELDS SEARCHED (IPC)<br><br>H02M<br>H05B<br>C21D |

The present search report has been drawn up for all claims

| Place of search | Date of completion of the search | Examiner |
|---|---|---|
| Munich | 12 December 2008 | Zettler, Karl-Rudolf |

EPO FORM 1503 03.82 (P04C01)

**ANNEX TO THE EUROPEAN SEARCH REPORT
ON EUROPEAN PATENT APPLICATION NO.**

EP 08 38 5002

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2008

| Patent document cited in search report | | Publication date | Patent family member(s) | | Publication date |
|---|---|---|---|---|---|
| EP 1363474 | A | 19-11-2003 | AT | 328462 T | 15-06-2006 |
| | | | DE | 10223152 A1 | 18-12-2003 |
| | | | DK | 1363474 T3 | 09-10-2006 |
| | | | ES | 2263871 T3 | 16-12-2006 |
| | | | PT | 1363474 T | 31-08-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. Fujita ; H. Akagi.** Pulse-density-modulated power control of a 4 kW 450 kHz voltage-source inverter for induction melting applications. *IEEE Trans. Industry Applications,* 1996, vol. IA-32 (2), 279-286